# EUROPÄISCHE PATENTSCHRIFT

(11) **EP 3 611 580 B1**
(45) Veröffentlichungstag und Bekanntmachung des Hinweises auf die Patenterteilung: **29.06.2022**
(21) Anmeldenummer: 19000373.1
(22) Anmeldetag: 13.08.2019
(51) Int. Cl.: G05B 19/042, C02F 1/00, B01D 29/60

(54) **STEUERVORRICHTUNG FÜR AUTOMATIKFILTER**
CONTROL DEVICE FOR AUTOMATIC FILTERS
DISPOSITIF DE COMMANDE POUR FILTRES AUTOMATIQUES

(30) Priorität: 18.08.2018 DE 102018006584
(43) Veröffentlichungstag der Anmeldung: 19.02.2020
(73) Patentinhaber: HETA Verfahrenstechnik GmbH, 35423 Lich (DE)
(72) Erfinder: HENSEL, Heiko, 35305 Grb. Harbach (DE)
(74) Vertreter: Flaccus, Rolf-Dieter

(56) Entgegenhaltungen:
- CN-A- 105 607 547
- US-A1- 2008 301 499
- US-A1- 2009 250 397

## Beschreibung

Die Erfindung betrifft eine Steuervorrichtung für Automatikfilter.

Automatikfilter sind in der Regel automatisch arbeitende Filter, welche sich bei vollem Volumenstrom durch Rückspülen oder sonstige Säuberungen einzelner Filterelemente eigenständig reinigen können. Das verunreinigte Fluid strömt über den Fluideinlass in das Filtergehäuse ein. Danach wird ein Filterelement im Automatikfilter von innen nach außen oder von außen nach innen mit dem Fluid beaufschlagt. Dabei setzen sich die Verunreinigungen größer als die ausgewählte Spaltweite der Filterelemente innerhalb der Filterelemente ab. Das dadurch gereinigte Fluid verlässt das Filtergehäuse über den Fluidauslass.

Zur Steuerung von Automatikfiltern wird in der Regel eine speicherprogrammierbare Steuerung (SPS) verwendet. Stand der Technik in der Filtersystem-Steuerung sind einfache speicherprogrammierbare Steuerungen, welche mit digitaler Technik programmiert werden können.

Nachteilhaft ist, dass bisher in diesem technischen Gebiet keine Rückmeldung und insbesondere keine datentechnische Kommunikation mit anderen Systemen möglich ist. Eine alleinige digitale Programmierbarkeit ohne Kommunikation ist nicht dazu geeignet, in ein System im Sinne einer Industrie 4.0 integriert zu werden.

Der Begriff "Industrie 4.0" ist die Bezeichnung für ein industrielles System mit einer umfassenden Digitalisierung der Produktion. Die industrielle Produktion soll im Rahmen des Systems "Industrie 4.0" mit moderner Informations- und Kommunikationstechnik vernetzt werden. Damit ist eine nahezu selbstorganisierte Produktion möglich. Es findet eine datentechnische Kommunikation zwischen Menschen, Maschinen, Anlagen, Logistik und Produkten statt und ermöglicht eine direkte Kooperation dieser Aspekte miteinander. Durch die Vernetzung ist es möglich, nicht nur auf einen einzelnen Produktionsschritt abzustellen, sondern eine ganze Wertschöpfungskette im Allgemeinen zu erfassen, zu untersuchen und zu optimieren.

US 2009/250397 A1 offenbart Systeme und Verfahren zum kombinierten Filtrieren und Enthärten von Wasser, wobei ein programmierbares Steuergerät vorgesehen ist, welches den Durchsatz des Wasserfilter in Abhängigkeit vom Durchsatz des Wasserenthärters steuert oder umgekehrt. Das System kann mit einer Netzwerkschnittstelle zum Datenaustausch mit einem Datennetzwerk ausgestattet sein. Das System umfasst ferner eine Filter-Datenschnittstelle zur Übermittlung von Steuerdaten an einen Automatikfilter, ein Sensorsystem und/oder eine Sensor-Datenschnittstelle zum Empfang von Zustandsdaten des Filters, eine Eingabe/Ausgabe-Einheit sowie eine Recheneinheit.

CN 105 607 547 A offenbart ein automatisches Steuersystem für Industrie-Ölfilter, das für die Vernetzung mit einem Industrie-4.0-System vorgesehen ist. Das Steuersystem weist einen Mikrocomputer auf, der mit einer Mensch-Maschine-Schnittstelle sowie mit einem elektrischen Maschinensteuersystem verbunden ist. Ferner sind Sensoren vorgesehen, welche Zustandsdaten (z. B. Flüssigkeitsspiegel, Druck, Temperatur) an den Mikrocomputer übermitteln. Der Ausgang des Maschinensteuersystems ist mit elektrischen Heizgeräten, elektromagnetischen Ventilen und Umwälzpumpen verbunden, so dass die Strömungsgeschwindigkeit, die Temperatur und der Druck automatisch geregelt werden können.

US 2008/0301499 A1 offenbart ein computer-implementiertes Verfahren um eine Abhilfemaßnahme zu bestimmen. Dabei werden diagnostische Daten erhoben, aus denen eine Vorhersage errechnet wird. Wenn diese oberhalb eines Schwellenwertes liegt, wird auf der Basis von früher aufgezeichneten Daten eine Wahrscheinlichkeit berechnet, die als Grundlage für die Auswahl einer Abhilfemaßnahme dient. Das Verfahren kann beispielsweise zur Planung von Wartungsarbeiten bei Maschinen eingesetzt werden.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, eine einfache Steuerung und Regelung für einen Automatikfilter zu ermöglichen und zusätzlich Daten des Automatikfilters zu erfassen und einem Benutzer oder System zur Verfügung zu stellen. Insbesondere ist eine Aufgabe der Erfindung, die erfassten Daten zu bearbeiten und anzuzeigen und zu ermöglichen, einen Automatikfilter in ein System gemäß des Konzepts "Industrie 4.0" zu integrieren.

Diese Aufgabe wird durch eine Steuervorrichtung gemäß dem Anspruch 1 gelöst.

Die erfindungsgemäße Steuervorrichtung für einen Automatikfilter umfasst die folgenden Komponenten:
- Filter-Datenschnittstelle
   Die Filter-Datenschnittstelle ist zur Übermittlung von Steuerdaten an einen Automatikfilter ausgelegt. Diese Steuerdaten werden von der Recheneinheit erzeugt (s.u.). Die Komponenten eines Automatikfilters und gegebenenfalls auch Komponenten eines Filtersystems (umfassend einen Automatikfilter, insbesondere Fluidpumpen und gegebenenfalls noch andere Komponenten) stehen im Betrieb der Steuervorrichtung mit dieser in Datenkontakt, so dass Steuersignale oder Steuerbefehle von der Steuervorrichtung (genauer von deren Recheneinheit) mittels der Filter-Datenschnittstelle an den Automatikfilter bzw. das Filtersystem (hier auch gegebenenfalls an Fluidpumpen, Absperrarmaturen etc.) gesendet werden können.
- Sensorsystem
   Gemäß einer möglichen Alternative umfasst die Steuervorrichtung ein Sensorsystem, mittels dessen der Zustand eines Automatikfilters erfasst werden kann.
- Sensor-Datenschnittstelle
   Alternativ oder ergänzend zum Sensorsystem umfasst die Steuervorrichtung eine Sensor-Datenschnittstelle zum Empfang von Zustandsdaten des Automatikfilters. Dies ist besonders bevorzugt, wenn der Automatikfilter bereits eigene Sensoren umfasst, deren Signale bzw. Daten von der Steuervorrichtung einfach ausgelesen werden können. Bevorzugt ist auch eine Kombination der beiden vorangehenden Möglichkeiten. Besonders bevorzugt ist der Fall, dass die Steuervorrichtung die Sensor-Datenschnittstelle umfasst und zusätzlich weitere Sensoren, die zusätzliche Zustandsdaten eines Filtersystems messen können. Insbesondere sind die Sensoren ebenfalls mit der Sensor-Datenschnittstelle datentechnisch verbunden, so dass die Steuervorrichtung alle relevanten Daten über die Sensor-Datenschnittstelle erhält.
- Eingabe/Ausgabe-Einheit
   Die Eingabe/Ausgabe-Einheit ist zur Eingabe von manuellen Befehlen und zur Ausgabe von Daten ausgelegt. Wohlgemerkt handelt es sich dabei um eine Einheit, bei der die Ausgabe räumlich dort erfolgt, wo auch die Eingabe erfolgt, so dass die Eingabe/Ausgabe-Einheit auch als "kombinierte Eingabe/ Ausgabe-Einheit" bezeichnet werden könnte. Eine bevorzugte Eingabe/Ausgabe-Einheit ist ein Berührungssensitiver Bildschirm ("Touchscreen") im Folgenden auch als "Touchpanel" bezeichnet.
- Netzwerkschnittstelle
   Diese Netzwerkschnittstelle dient zum Datenaustausch mit einem Datennetzwerk. Auch wenn als Datennetzwerk jedes beliebige Netzwerk (z.B. Intranet, Internet, insbesondere Internet der Dinge, LAN, WLAN, Mobilfunknetz) verwendet werden kann, ist stets ein Datennetzwerk besonders bevorzugt, welches in einem System der Industrie 4.0 verwendbar ist. Die Steuervorrichtung ist bevorzugt dazu ausgestaltet, über Sensoren oder die Sensor-Datenschnittstelle erhaltene Daten und/oder von ihr an den Automatikfilter bzw. an das Filtersystem applizierte Steuerdaten an weitere Stellen im Netzwerk zu senden und insbesondere auch Daten über die Netzwerkschnittstelle zu empfangen.
- Recheneinheit
   Die Recheneinheit ist zur Verarbeitung der Zustandsdaten des Automatikfilters, und zur Bedienung der Netzwerkschnittstelle und zur Steuerung der Eingabe/Ausgabe-Einheit und Verarbeitung von eingegebenen Daten ausgelegt. Des Weiteren ist die Recheneinheit zur Erstellung von Steuerdaten zur Steuerung eines Automatikfilters ausgelegt. Somit ist die Steuervorrichtung dazu ausgelegt, durch Ausgabe dieser Steuerdaten über die Filter-Datenschnittstelle einen Automatikfilter zu steuern. Die Recheneinheit kann z.B. eine Speicherprogrammierbare Steuerung (SPS) umfassen.

Bevorzugt ist die Recheneinheit zur Steuerung eines Rückspülvorgangs und/oder zur Regelung des Flusses des in den Automatikfilter einströmenden Fluids ausgelegt.

Besonders bevorzugt ist die Recheneinheit dazu ausgelegt, zwei oder mehr Automatikfilter gleichzeitig zu steuern. Da eine Funktion der Recheneinheit die Steuerung eines Filters ist, könnte sie auch als "Steuereinheit" bezeichnet werden, die gleichzeitig Sensordaten und Eingaben auswertet und eine Ausgabeeinheit steuert.

Ein erfindungsgemäßes Filtersystem umfasst (zumindest) einen Automatikfilter und eine erfindungsgemäße Steuervorrichtung. Es ist bevorzugt, dass das Filtersystem zusätzlich Fluidpumpen zum Erzeugen eines Fluidflusses und/oder Absperreinheiten zur Schaltung eines Fluidflusses auf eine Fluidleitung aufweist. Das Filtersystem ist dabei bevorzugt so ausgestaltet, dass eine Säuberung, insbesondere eine Rückspülung, des Automatikfilters möglich ist, vorzugsweise ohne dass Verunreinigungen aus dem Fluidauslass des Automatikfilters austreten.

Ein exemplarisches Steuerverfahren für einen Automatikfilter, insbesondere für eine erfindungsgemäße Steuervorrichtung, umfasst die folgenden Schritte:
- Steuerung eines Automatikfilters.
   Dabei wird der Automatikfilter nach bekannten Protokollen gesteuert. Insbesondere umfasst die Steuerung die Steuerung eines Rückspülvorgangs und/oder die Regelung des Flusses des in den Automatikfilter einströmenden Fluids. Die Steuerung erfolgt im Grunde dadurch, dass die Recheneinheit Steuerdaten basierend auf einer Eingabe über die Eingabe/ Ausgabe Einheit erzeugt und/oder Steuerdaten aufgrund der Zustandsdaten des Automatikfilters erzeugt und über die Filter-Schnittstelle zur Steuerung des Filters ausgibt.
- Überwachung
   Es wird (gegebenenfalls über eine Sensor-Datenschnittstelle oder über Sensoren) der Zustand des Automatikfilters und insbesondere auch weiteren Komponenten eines Filtersystems überwacht. Der Zustand des Automatikfilters ergibt sich aus von Sensoren ermittelten Messdaten, z.B. Druckdaten, des Automatikfilters.
- Eingabe/Ausgabe
   Es können Steuerbefehle von einem Benutzer eingegeben und Daten ausgegeben werden. Die Dateneingabe erfolgt dabei auf dem Medium, auf dem auch die Ausgabe erfolgt.
- Netzwerkkommunikation
   Es werden Daten für einen Datenaustausch mit einem Datennetzwerk gesendet und/oder von diesem empfangen.

Für das Steuerverfahren gelten sinngemäß die Ausführungen zur Steuervorrichtung und umgekehrt.

Gemäß einer bevorzugten Ausführungsform umfasst die Steuervorrichtung einen Datenspeicher, insbesondere eine interne Datenbank, in dem Steuerprogramme, Parameterwerte, Grenzwerte, Messwerte, Zeitpunkte, Standardausgaben oder Benutzerinformationen abgespeichert werden können. Der Datenspeicher umfasst bevorzugt einen nichtflüchtigen Speicher. Besonders bevorzugt umfasst der Datenspeicher Daten zu einer schematischen Abbildung des Filters und dessen Anbauten, vorgegebene Wartungs- und Prozessintervalle, eine Liste über Verschleiß- und Ersatzteile oder Filterelemente, insbesondere eine Ein- bzw. Ausbauanleitung für diese Elemente, Pflege- und Wartungsempfehlungen, einer Betriebsanleitung, zu Schaltplänen, Serviceadressen, Texten zu Fehlermeldungen, Installationsanweisungen (z.B. Anzugsmomente von Schrauben) und zu passwortgeschützten Bedienebenen.

Die Recheneinheit ist bevorzugt dazu ausgestaltet, Daten zu Systemeinstellungen, Passworten, Historie der Fehlermeldungen, Anzahl der Rückspülprozesse, Betriebsstunden, aktuell gemessenen Parameterwerten der Automatikpumpe, Historie eines Filters im Betrieb (z.B. Fehlermeldungen, Sensorwerte) in dem Datenspeicher abzuspeichern und aus diesem Datenspeicher zu lesen.

Ein wichtiger Aspekt der Erfindung ist die Überwachung des Zustands des Automatikfilters. Hierzu sollten Sensoren wichtige Zustandsdaten des Automatikfilters erfassen. Besonders wichtige Zustandsdaten eines Automatikfilters sind Druckdaten, insbesondere der Differenzdruck zwischen dem Druck vor dem Filtermedium (z.B. am Fluideinlass) und nach dem Filtermedium (z.B. an Fluidauslass). Weitere wichtige Zustandsdaten sind Daten zur Strömung des Fluids, Daten zur Temperatur, Daten zum Motor des Filters (z.B. zum Bewegen des Filterelements oder zur Abfuhr von Verunreinigungen), Daten zu einer Pumpe, Daten zu dem Zustand von Absperreinheiten (z.B. Absperrarmaturen). Bevorzugte Sensoren, die insbesondere Teil der Steuervorrichtung sein können, sind diesbezüglich Sensoren der Gruppe Drucksensoren, Strömungssensoren, Temperatursensoren, Sensoren zur Messung der elektrischen Spannung und/oder Stromstärke, Schalter zur Überwachung einer Position. Bevorzugt ist die Steuervorrichtung dazu ausgelegt, zu mehreren Zeitpunkten (insbesondere kontinuierlich im Rahmen einer digitalen Überwachung) die Messwerte der Sensoren aufzunehmen.

Bevorzugt umfasst die Vorrichtung keine mechanischen Bedienelemente wie z.B. Knöpfe oder Schalter, wobei ein Lasttrennschalter (Hauptschalter "ein/aus") nicht zwingend als Bedienelement angesehen wird. Die Bedienung wird mittels der Eingabe/Ausgabe-Einheit vorgenommen, die gleichzeitig auch Informationen ausgibt.

Gemäß einer bevorzugten Ausführungsform umfasst die Vorrichtung als Eingabe/Ausgabe-Einheit ein Touchpanel (bzw. "Touchscreen"), über das alle wesentlichen Befehle eingegeben und visuelle Informationen ausgegeben werden können. Die Technik der Steuervorrichtung wird bevorzugt in einem Schaltkasten untergebracht, in dessen Frontseite das Touch Panel integriert ist. Die Steuervorrichtung ist bevorzugt so gestaltet, dass über das Touchpanel eine Anzahl von Funktionen der Steuervorrichtung aufgerufen und verwaltet werden können.

Zu den von der Steuervorrichtung erfassten und von der Eingabe/Ausgabe-Einheit ausgegebenen Informationen gehören insbesondere Informationen der Gruppe
- eine schematische Abbildung des Filters und dessen Anbauten,
- aktuell gemessene Parameterwerte des Automatikfilters (z.B. Differenzdrücke oder Reinigungszyklus), insbesondere dargestellt in Form von Graphen und/oder Tabellen,
- Wartungs- und Prozessintervalle
- Historie eines Filters im Betrieb
- Verschleiß- und Ersatzteile/Filterelemente, insbesondere eine Ausbauanleitung für Verschleißteile
- Pflege- und Wartungsempfehlungen
- Betriebsanleitung
- Schaltpläne
- Serviceadressen
- Betriebsstunden
- Systemeinstellungen verwalten
- Absperrklappe geöffnet/geschlossen
- Passwortgeschützte Bedienebenen
- Anzahl der Rückspülprozesse
- Fehlermeldungen
- Installationsanweisung (z.B. Anzugsmomente von Schrauben)

Bevorzugt sind auf der Eingabe/Ausgabe-Einheit eine Anzahl von Bedienungs-, Informations- und Handlungsfunktionen anzeigbar (bevorzugt alle von Sensoren gesammelten Daten und alle Steuerfunktionen). Die Steuervorrichtung ist bevorzugt dazu ausgelegt, die Bedienungs-, Informations- und Handlungsfunktionen auf der Eingabe/Ausgabe-Einheit anzuzeigen und von dieser Nutzereingaben zum Anzeigemodus, zur Bedienung oder zur Steuerung entgegenzunehmen. Es ist von Vorteil, wenn ein Benutzer eine Anzahl wichtiger Informationen mit einem Blick erfassen oder mit wenigen Berührungen aufrufen kann. Bevorzugt werden auf der Eingabe/ Ausgabe-Einheit Informationen und/oder Bedienelemente zur Überwachung des Differenzdrucks, zur Durchflussmessung, zur Anzahl der Rückspülprozesse, zum Öffnen der Absperrklappe, zum Schalten des Motors oder auch eine Hochrechnung auf die Standzeit der Filtermedien angezeigt.

Die Steuervorrichtung ist bevorzugt dazu ausgestaltet, dass mittels der Eingabe/Ausgabe-Einheit Änderungen der Recheneinheit, insbesondere Programmänderungen oder Parameteränderungen, vorgenommen werden können. Bevorzugte Änderungen sind eine Wahl eines voreingestellten Programms und/oder Filtertyps, eine Änderung der Zeiten und Differenzdrücke oder eine Änderung oder Programmierung der angebauten Komponenten (das vorhergehende vorzugsweise durch den Anwender und/oder Bediener), oder eine Änderung der Berstdrücke (dies aber bevorzugt nur durch einen Administrator). Hier ist es vorteilhaft, wenn sich die Zugriffsberechtigung durch Passwörter individuell zuteilen und schützen lässt.

Bevorzugt ist die Steuervorrichtung zu einem Betrieb in einem System gemäß den Vorgaben des Prinzips Industrie 4.0 ausgelegt. Die Konzeption des Prinzips Industrie 4.0 sieht die Integration von industriellen Prozessen in computergestützte Systeme und Vernetzungen via WLAN und Internet vor. Dokumentation und Verwaltung der Steuervorrichtung ist bevorzugt kompatibel mit im Rahmen des Konzepts Industrie 4.0 verwendeten Protokollen, Programmen und Vorgängen (z.B. mit Microsoft Office & Excel).

Die Netzwerkschnittstelle ist dazu ausgelegt, über ein Netzwerk eine Datenkommunikation mit anderen Geräten, bevorzugt in einem System gemäß Industrie 4.0, aufzubauen. Bevorzugt umfasst die Steuervorrichtung als Netzwerkschnittstelle oder zusätzlich einen USB-Anschluss. Die Netzwerkschnittstelle ist insbesondere dazu ausgelegt, über eine Funkverbindung, z.B. ein WLAN oder eine Mobilfunkverbindung zu kommunizieren.

Mit dem Ausdruck "Datenkommunikation mit anderen Geräten" ist eine Datenkommunikation mit Geräten gemeint, die in einem Systemverbund, in dem sich insbesondere auch der Automatikfilter befindet, Arbeiten ausführen bzw. bestimmte Funktionen im Betriebsablauf erfüllen. Solche Geräte sind z.B. Pumpen, Überwachungseinrichtungen, Maschinen oder andere Filter. Für eine Integration in ein System gemäß Industrie 4.0 ist es besonders vorteilhaft, wenn ein betreffendes Automatikfiltersystem (Automatikfilter und Steuervorrichtung) "gläsern" ist, also sein Zustand von anderen Geräten erfasst werden kann, oder Informationen von anderen Geräten auswerten und Nutzen kann, damit diese Informationen zum Wohle des gesamten Betriebsablaufs verwendet werden können.

Diesbezüglich ist die Steuervorrichtung bevorzugt dazu ausgestaltet, über das Sensorsystem oder die Sensor-Datenschnittstelle erhaltene Daten und/oder von ihr an den Automatikfilter applizierte Steuerdaten an weitere Stellen im Datennetzwerk zu senden, insbesondere an weitere Geräte im Netzwerk, besonders bevorzugt an eine zentrale Steuereinheit des Betriebsablaufs, eine Steuereinheit für einen Teil-Betriebsablauf, ein Gerät ("Vorläufer-Gerät"), welches im Betriebsablauf vor dem Automatikfilter angeordnet ist, und von dessen Funktion insbesondere das in den Fluideinlass des Filters einströmende Fluid beeinflusst wird, und/oder ein Gerät ("Nachfolge-Gerät), welches im Betriebsablauf nach dem Automatikfilter angeordnet ist, und dessen Funktion insbesondere von dem aus dem Fluidauslass des Filters ausströmende Fluid beeinflusst wird.

Die Steuervorrichtung ist bevorzugt dazu ausgelegt, dass sie Daten, die sie von einem Vorläufer-Gerät erhält, analysiert, daraus Parameter des zu erwartenden Fluidflusses ableitet (z.B. Flussgeschwindigkeit, Verschmutzungsgrad, Verschmutzungsart oder Fluidmenge) und die Funktionsweise des Filters oder sonstige Parameter des Filters (z.B. Säuberungs- oder Wartungsintervalle) entsprechend anpasst. Alternativ oder zusätzlich ist die Steuervorrichtung bevorzugt dazu ausgelegt, dass sie Zustandsdaten (z.B. Daten über Parameterwerte des Filters und/oder des aktuellen Fluidflusses) oder Daten zum zu erwartenden Fluidfluss an ein Nachfolge-Gerät sendet.

Bevorzugt ist die Steuereinrichtung dazu ausgelegt, dass Informationen zur Datenkommunikation mit anderen Geräten im Netzwerk auf der Eingabe/Ausgabe-Einheit ausgegeben werden und/oder mittels einer Eingabe an der Eingabe/Ausgabe-Einheit geändert werden können, z.B. welche Daten an welche Geräte ausgegeben werden bzw. welche Daten welcher Geräte empfangen werden können.

Bevorzugt ist die Steuervorrichtung dazu ausgelegt, dass sie die Anforderungen des Referenzarchitekturmodell 4.0 ("RAMI 4.0") erfüllt, insbesondere die DIN-Norm (DIN SPEC 91345) und die internationale Vornorm (IEC PAS 63088).

Bevorzugt sind die (alle) hardwaretechnischen Komponenten der Steuervorrichtung mit gängigen, genormten Steckern (insbesondere Clip- oder Schraubsteckern) untereinander verbunden. Dies hat den Vorteil, dass kein (elektrisch geschultes) Fachpersonal bei dem Einbau oder Austausch von Komponenten benötigt wird.

Bevorzugte Sensoren, die von der erfindungsgemäßen Steuervorrichtung ausgelesen oder umfasst werden, sind im Folgenden anhand bevorzugter Messungen am Automatikfilter beschrieben.

Eine Druckmessung bzw. eine Differenzdruckmessung wird bevorzugt durch Drucksensoren (" Druckmessdosen") durchgeführt, z.B. IFM Drucksensoren. Bevorzugt ermitteln zwei Druckmessdosen, eine an einem Fluideinlass und eine an einem Fluidauslass eines Automatikfilters, den Realdruck. In der Steuervorrichtung wird die Differenz zwischen den beiden gemessenen Drücken ermittelt und bevorzugt auf der Eingabe/Ausgabe-Einheit angezeigt. Zwar wäre es für eine Zusetzung eines Filterelements von Vorteil, diese direkt und nicht indirekt über den Differenzdruck zu messen, die vorgestellte Messung ist jedoch einfach und preisgünstig zu bewerkstelligen und gibt den Zustand des Filterelements vergleichsweise gut wieder.

Eine Strömungsmessung bzw. eine Erfassung des Durchflusses des Fluids kann mittels Strömungssensoren erreicht werden. Diese erfassen den realen Durchfluss und geben die Daten zum Auswerten (gegebenenfalls über die Sensor-Datenschnittstelle) an die Steuervorrichtung weiter.

Die Temperatur kann mittels eines Temperatursensors gemessen werden. Die Temperaturmessung kann z.B. für Prozessabläufe, für die Viskosität des Mediums oder zur Bestimmung des Verschleißes des Filters vorteilhaft sein.

Eine Motorauswertung umfasst die Last, Einsatzzeit und/oder die Anzahl der Umdrehungen des Filtermotors während des Betriebs. Wenn eine Überlast detektiert wird ist vermutlich das Drehmoment zu hoch und es kann eine diesbezügliche Fehlermeldung auf der Eingabe/Ausgabe-Einheit angezeigt werden. Das gleiche kann erfolgen, wenn z.B. die Last zu niedrig ist. Die Anzahl der Rückspülprozesse bzw. Säuberungen des Filterelements kann über die Einsatzzeit oder die Anzahl der Umdrehungen (z.B. über einen Absolutwertgeber) ermittelt werden.

Eine Kontrolle der Absperreinheit (Absperrarmatur) eines Automatikfilters kann z.B. mittels eines Tasters ermittelt werden. Die Absperreinheit erhält dazu bevorzugt einen separaten Sensor, der ihren Zustand misst.

Zusätzlich kann aus der Öffnungszeit der Rückspülklappe das auszuschleusende Abfallmedium zusammen mit einem gemessenen Druck und der bekannten Durchlassfläche der Rückspülklappe ermittelt werden. Die Recheneinheit ist somit bevorzugt dazu ausgestaltet, die Menge des ausgeschleusten Abfallmediums aus Zustandsdaten zur dem Druck, einer gemessenen Öffnungszeit der Rückspülklappe und einer vorgegebenen Durchlassfläche der Rückspülklappe zu ermitteln.

Gemäß einer bevorzugten Ausführungsform umfasst die Vorrichtung eine Anzahl von vorgegebenen Steuerprogrammen. Diese sind bevorzugt als Dateien in der internen Datenbank der Steuervorrichtung abgespeichert. Eine Anzahl dieser Steuerprogramme ist dabei zur Steuerung einer entsprechenden Anzahl vorbekannter Automatikfilter ausgelegt. Alternativ oder ergänzend ist mindestens ein Steuerprogramm zur Steuerung einer entsprechenden Anzahl von nicht-vorbekannten Automatikfiltern ausgelegt, wobei dieses Steuerprogramm eine Anzahl von veränderbaren Parametern zur Steuerung eines Automatikfilters umfasst. Ein solches Steuerprogramm ist besonders bevorzugt so ausgestaltet, dass Parameterwerte von einem Benutzer manuell verändert werden können.

Beispielsweise umfasst die Vorrichtung insgesamt vier Steuerprogramme. Drei dieser Steuerprogramme sind speziell so ausgestaltet, dass jedes dieser Programme einen vorbekannten Filter auf eine bewährte Art und Weise steuern kann. Das vierte Steuerprogramm ist so gestaltet, dass Parameterwerte von einem Benutzer manuell zur Steuerung und/oder Überwachung eines im Wesentlichen beliebigen Automatikfilters eingegeben werden können.

Eine bevorzugte Art der Steuerung wird im Folgenden beschrieben.

Da die Hauptfunktion von Filtern die Filtration von Fluiden ist, insbesondere Flüssigkeiten, tritt häufig der Fall auf, dass Verunreinigungen des Fluids sich an einem Filterelement ablagern. Dies kann dazu führen, dass sich der Fluidfluss vermindert, da die Öffnungen des Filterelements sich langsam mit Feststoffen zusetzen. Durch die abgelagerten Verunreinigungen erhöht sich mit der Zeit dann der Differenzdruck innerhalb des Filters, der bevorzugt als Druckdifferenz zwischen dem Fluideinlass und dem Fluidauslass gemessen wird. Dies kann Schäden an dem Filter hervorrufen und bei Überschreiten des Berstdrucks den Filter sogar zerstören.

Bevorzugt wird bei einem zu hohen Differenzdruck eine Rückspülung vorgenommen. Die Steuervorrichtung ist dazu bevorzugt so ausgestaltet, dass bei einem zu hohen Differenzdruck, also insbesondere bei Erreichen eines Grenzwertes für den Differenzdruck, ein Rückspülvorgang automatisch eingeleitet wird. Der Grenzwert ist voreingestellt, kann jedoch bevorzugt durch einen Benutzer manuell verändert werden. Bevorzugt ist diese manuelle Änderungsmöglichkeit durch den Grenzdruck begrenzt. Ein Benutzer kann besonders bevorzugt den Grenzwert nur so weit verändern, dass ein einen voreingestellten Grenzwert für den Berstdruck, insbesondere Abzüglich eines Sicherheitswertes, nicht übersteigt. Der Grenzwert für den Berstdruck ist bevorzugt zum Schutz des Filterelements gesichert und nicht veränderbar.

Zur Durchführung eines Rückspülvorgangs findet eine kombinierte Steuerung einer Absperrarmatur und des Fluidflusses statt. Bevorzugt wird der Fluidauslass geschlossen, damit kein verunreinigtes Fluid austreten kann. Der Fluidfluss durch das zugesetzte Filterelement wird umgedreht und die dadurch fortgespülten Verunreinigungen durch einen separaten Auslass abgeführt, der mittels einer Absperrarmatur geöffnet werden kann. Die Steuerung der Absperrarmatur erfolgt bevorzugt pneumatisch oder elektrisch angeregt durch die Steuervorrichtung.

Der Rückspülvorgang wird normalerweise nach einem Abreinigungsprozess beendet. Bei hoher Schmutzbelastung oder schwer ausspülbarer Verunreinigungen kann der Rückspülvorgang aber auch mehrmals wiederholt werden. Zur Entscheidung, ob ein weiterer Rückspülvorgang durchgeführt werden soll, wird bevorzugt erneut der Differenzdruck bei normalem Filterbetrieb gemessen und, wenn der gemessene Druck einen Säuberungs-Grenzwert überschreitet, ein erneuter Rückspülvorgang durchgeführt; der Säuberungs-Grenzwert kann durchaus geringer sein als der Grenzwert, der einen initialen Rückspülvorgang einleitet, da ja eine nachhaltige Säuberung erreicht werden soll. Nach dem Rückspülvorgang wird die Absperrarmatur wieder so gesteuert, dass sie in den ursprünglichen Zustand (normaler Filterbetrieb) zurückversetzt wird und der Filtrierprozess fortgesetzt.

Bevorzugt ist die Steuervorrichtung dazu ausgelegt, einen Differenzdruck innerhalb des Filters aufzunehmen, der insbesondere als Druckdifferenz zwischen dem Fluideinlass und dem Fluidauslass gemessen wird, und bei einem zu hohen Differenzdruck automatisch eine Rückspülung einzuleiten.

Bevorzugt erfasst die Steuervorrichtung zu allen Funktionen des Automatikfilters bzw. Filtersystems die mittels Sensoren gemessenen Werte und Zustände zusammen mit dem Messzeitpunkt und speichert diese ab. Auswertungen, wie beispielsweise die Anzeige des Differenzdrucks, sollten mittels der Eingabe/Ausgabe-Einheit für einen Benutzer angezeigt werden, insbesondere als aktuelle Daten und/oder als Auftragungen mehrerer Messungen in Abhängigkeit zum Messzeitpunkt als Graph, Strukturdiagramm oder Tabelle.

Gemäß einer bevorzugten Ausführungsform werden in einem Zeitintervall zu mehreren Zeitpunkten der Zustand des Automatikfilters (und insbesondere auch von anderen Komponenten eines Filtersystems) gemessen und aus diesen Daten eine Wahrscheinlichkeit für einen Fehlzustand des Automatikfilters in einem zukünftigen Zeitintervall ermittelt. Dies hat den Vorteil, dass eine Verminderung oder gar eine Vermeidung von Störfällen, Stillstands- und Reparaturzeiten erreicht wird. Beispielsweise kann aufgrund der Veränderung des Differenzdrucks (Anstieg) ermittelt werden, wann ein Filtermedium des Automatikfilters voraussichtlich zugesetzt sein wird und frühzeitig Gegenmaßnahmen ergriffen werden, z.B. eine kurze Rückspülung automatisch eingeleitet werden kann. Bevorzugt wird dazu eine Modellfunktion an die in einem Zeitintervall gemessenen Daten mit bekannten Methoden angepasst ("angefittet"). Dann wird ein Zeitpunkt ermittelt, zu dem die Modellfunktion einen vorgegebenen Grenzwert erreicht. Dieser Zeitpunkt wird dann vorzugsweise als Zeitpunkt eines möglichen Fehlzustandes ausgegeben. Die Modellfunktion kann aber auch mit mehreren Grenzwerten verglichen werden und anhand dieses Vergleichs die Art einer Gegenmaßnahme bestimmt werden.

Gemäß einer bevorzugten Ausführungsform ist die Recheneinheit dazu ausgelegt, aus Messwerten, die zu mehreren Zeitpunkten der jeweiligen Zustand des Automatikfilters darstellen, eine Wahrscheinlichkeit für einen Fehlzustand des Automatikfilters in einem zukünftigen Zeitintervall zu ermitteln. Des Weiteren ist die Recheneinheit bevorzugt dazu ausgelegt, eine Modellfunktion an die in einem Zeitintervall gemessenen Daten anzupassen und diese Modellfunktion insbesondere mit einer Anzahl von Grenzwerten zu vergleichen.

Beispielsweise kann eine Modellfunktion, die den Verlauf des Differenzdrucks wiedergibt, mit einem Grenzwert für den Berstdruck, einem Grenzwert für das vollständige Zusetzen des Filterelements und einem Grenzwert für eine vorteilhafte Rückspülung verglichen werden. Zu einem Zeitpunkt, an dem die Modellfunktion den Grenzwert für eine vorteilhafte Rückspülung erreicht oder überschreitet, kann eine Rückspülung angesetzt und können andere Geräte in einem Industrie 4.0-System davon in Kenntnis gesetzt werden, dass um X Uhr eine kurze Rückspülung erfolgen sollte. Liegt der Fall vor, dass eine Rückspülung in dem System in nächster Zeit nicht möglich ist, da z.B. eine zeitkritische Situation vorliegt, kann dem Industrie 4.0-System der Zeitpunkt mitgeteilt werden, an dem das Filterelement vermutlich zugesetzt sein wird, und eine ausreichende Arbeit des Automatikfiltern nicht mehr gewährleistet ist, kann eine Rückspülung mit höherer Priorität im System anberaumt werden. Für den Fall, dass die Ursache für den Druckanstieg eine andere ist, kann (gegebenenfalls mit einer weiteren Anpassung der Modellfunktion) ein zukünftiger Zeitpunkt angegeben werden, wann der Berstdruck erreicht sein und der Filter komplett abgeschaltet wird.

Bei Erreichen des Berstdruckes schaltet die Steuervorrichtung den Automatikfilter in sein Not-Programm, bzw. schaltet die Steuervorrichtung in ein Not-Programm für den Automatikfilter oder sie öffnet den Schmutzauslass des Automatikfilters, um dessen Filterelement zu entlasten und meldet diesen Vorgang an eine Leistelle bzw. zeigt diesen in der Eingabe/Ausgabe-Einheit an.

Auf Basis der kontinuierlichen Betriebsdatenerfassung und der historischen Verfügbarkeit von Daten bis ganz dicht an die Echtzeit heran, sowie der systematischen Auswertung aller Prozessdaten lassen sich Fehlentwicklungen also frühzeitig diagnostizieren und Störfälle vermeiden.

Bei Automatikfiltern, aber insbesondere auch bei manuellen Filtern, kann mittels einer solchen Modellfunktion auch die reale Lebensdauer der Elemente im Prozess ermittelt werden.

Auch die auf aktueller Datenbasis mögliche vorausschauende Wartung führt zu erheblichen Kostenvorteilen. In aller Regel ist es günstiger, ein Filterelement auszutauschen bevor es erschöpft ist, als es auf einen Störfall und Systemstillstand ankommen zu lassen. Bevorzugt wird die Lebensdauer eines Automatikfilters oder eines sonstigen Komponente (z.B. eines Filterelements oder einer Dichtung) dadurch ermittelt, dass eine Anzahl von Zustandsdaten mit Grenzwerten verglichen werden, wobei bereits ein Grenzwert ausreichend sein kann, und bei Erreichen, Überschreiten oder Unterschreiten eines Grenzwertes der Ablauf der Lebensdauer festgelegt wird. Die Steuervorrichtung ist besonders bevorzugt dazu ausgelegt, aus der Steigung, bzw. der durchschnittlichen Steigung, eines zeitlichen Verlaufs von Zustandsdaten das Erreichen eines Grenzwertes zu extrapolieren und die Zeit bis zum Ablauf der Lebensdauer bestimmt (und auf der Eingabe/Ausgabe-Einheit ausgegeben) wird. Auf diese Weise ist eine autonome Ermittlung der Lebensdauer möglich.

Gemäß einer weiteren Ausführungsform der Erfindung ist die Steuervorrichtung dazu ausgestaltet, basierend auf dem Verlauf einer Modellfunktion eine Bestellung von Verbrauchs- und Ersatzteilen zu veranlassen. Wenn eine Modellfunktion, umfassend Daten zum Druck, Temperatur und/oder Vibrationen des Automatikfilters (gegebenenfalls in Kombination miteinander), einen vorgegebenen Grenzwert erreicht, kann beispielsweise eine Bestellung eines Filterelements, eines kompletten Automatikfilters oder sonstiger Komponenten des Filtersystems automatisch vorgenommen werden. Die Art der Modellfunktion hängt dabei ganz von dem Aufbau des Automatikfilters bzw. des Filtersystems ab. Durch die Auswertung der historisch verfügbaren Systemdaten ist damit die Optimierung von Wartungs- und Pflegezyklen, sowie der Filterwechselintervalle möglich.

Im Hinblick auf Filter, die manuell gewechselt werden müssen und keine automatische Abreinigung besitzen ("Manuelle Filter", z.B. Kerzenfilter, Siebkorbfilter), ist die vorangehend beschriebene Ausführungsform auch vorteilhaft anwendbar. Im "manuellen Modus" bzw. dem Modus für manuelle Filter wird das Filterelement eingesetzt und die Steuervorrichtung beginnt die Daten zu erfassen, z.B. in Form einer Durchflussmessung, Temperaturmessung, Druckmessung bzw. Differenzdruckmessung. Wenn das Element verschmutzt ist (was sich z.B. durch eine Differenzdruckmessung ermitteln lässt), tauscht ein Mitarbeiter dieses aus und bestätigt den Austausch in der Steuervorrichtung. Dieser Zyklus wird eine vorgegebene Anzahl von Durchläufen (z.B. 3 Mal) vollzogen. Anschließend ermittelt die Steuervorrichtung anhand der gemessenen Parameter im Prozess eine reelle "Lifetime" für einen manuellen Filter.

Nach Abschluss dieses Procederes ist es möglich, einem Werker oder einer Leitstelle vorab anzugeben, wie lange ein manueller Filter noch in der Anlage betrieben werden kann. Dieses hat von Vorteil, dass die Standzeiten bzw. Ausfallzeiten durch Anhalten der Anlagen und Wechseln der Elemente reduziert werden kann. Oftmals ist der vorzeitige Wechsel eines Elements während eines allgemeinen "Shut Down" der Anlage wesentlich günstiger als die Anlage außerordentlich herunter zu fahren.

Bevorzugt umfasst die Steuervorrichtung einen Datenspeicher (s.o.) und ist dazu ausgestaltet, Zustandsdaten verknüpft mit dem Zeitpunkt der entsprechenden Datennahme in dem Datenspeicher abzuspeichern. Besonders bevorzugt umfasst die Steuervorrichtung einen nichtflüchtigen Datenspeicher, bevorzugt einen beschreibbaren Lesespeicher (engl. "Electrically Erasable Programmable Read-Only Memory" - EEPROM) oder ein Halbleiterlaufwerk ("engl. "Solid-State-Drive" - SSD), in dem die Zustandsdaten verknüpft mit dem Zeitpunkt der entsprechenden Datennahme abgespeichert werden. Dies hat den Vorteil, dass nach einem Stromausfall und einem automatischen Neustart der letzte Systemzustand zusammen mit den historischen Daten wieder zur Verfügung steht, wodurch ebenfalls Stillstandszeiten und Kosten vermieden werden.

Bevorzugt umfasst die Steuervorrichtung vorher festgelegte, jedoch bevorzugt änderbare, Programmblöcke zur Steuerung von Filtern. Die Programmblöcke unterscheidet sich dabei bevorzugt in zwei Kategorien, nämlich "Manuelle Filter" und "Automatikfilter". Die Kategorie "Automatikfilter" ist bevorzugt weiter untergliedert und umfasst bevorzugt einen Programmblock der Gruppe "Rückspülfilter", "Bernoullifilter" und "Schaberfilter". Die Kategorie "Manuelle Filter" ist bevorzugt weiter untergliedert und umfasst bevorzugt einen Programmblock der Gruppe "Kerzenfilter" und "Siebkorbfilter". Die Programmblöcke umfassen Steuerparameterwerte, insbesondere festgelegte Steuerbefehle und bevorzugt Grenzwerte für Zustände des jeweiligen Filters und werden bevorzugt bei der Herstellung der Steuervorrichtung festgelegt.

Bevorzugt umfasst die Steuervorrichtung Daten in Form von Zusatzmodulen wie z.B. Differenzdruckmessung, Druckmessung, Durchflussmessung, Temperaturmessung, welche optional beigeschaltet werden können. Die Zusatzmodule sind Programmeinheiten oder Datenblöcke, die als "Anbaublöcke" oder Zusatzkomponenten funktional mit einzelnen Programmblöcken verknüpft werden können. Beispielsweise könnte damit dem Programmblock "Rückspülfilter" die Funktionalität einer Differenzdruckmessung hinzugefügt werden. Die Zusatzmodule sind bevorzugt vorprogrammiert und können bei Bedarf durch eine entsprechende Eingabe eines Benutzers in die Steuervorrichtung zugeschaltet werden, bevorzugt zu einem spezifischen Programmblock.

Die dermaßen angesteuerten Filter können vorteilhaft in den Bereichen chemische Industrie, Petrochemie, Kernenergie bzw. Kraftwerke, Lebensmittelindustrie, Kühlanlagen, Meerwasser- bzw. Seewasserfiltration oder Pharmazie eingesetzt werden.

Vorteil der vorliegenden Erfindung ist die Realisierung einer digitalen und dialogfähigen Lösung zum smarten Controlling von automatischen und manuellen Filtersystemen. Sie ermöglicht die Kontrolle und Steuerung von Filterprozessen und -anlagen insbesondere über ein selbsterklärendes Touch Panel-Menü. Auf ihm ist bevorzugt eine praxisgerechte Anzahl von Bildschirmdarstellungen mit Bedienfeldern, Messwertangaben, Grafiken, Linkangeboten usw. verfügbar. Sie umfasst die Möglichkeit eines weiten Spektrums der Messwerterfassung und -auswertung, des Systemmonitorings, der Bedienerunterstützung, sowie des Zugriffs auf historische Daten und Dokumente für Betrieb und Service. Durch eine Vernetzung via WLAN und Internet unter Einbeziehung von PC-Arbeitsplätzen, sowie mobilen Notebook-, Tablet- und Handy-Nutzungen werden Funktionen wie externe Kontrolle oder auch Fernwartung möglich.

Die Vorteile, die eine digitalisierte und vernetzte Steuerung von Filtersystemen bieten, wie z.B. Prozesskontrolle, Funktionssicherheit, vorausschauende Wartung, Kostenersparnis usw., eröffnen ein weites Anwendungsfeld. Hinzu kommt die Option einer zukunftsorientierten Vorbereitung zur Integration in ein unternehmensweites Industrie 4.0-System.

Beispiele für bevorzugte Ausführungsformen der erfindungsgemäßen Vorrichtung sind in den Abbildungen schematisch dargestellt.

Figur 1 zeigt eine bevorzugte Ausführungsform der Steuervorrichtung,

Figur 2 zeigt ein Ausführungsbeispiel mit einem Kantenspaltfilter.

Figur 3 zeigt ein Ausführungsbeispiel mit einem Bernoullifilter.

Figur 4 zeigt ein Ausführungsbeispiel mit einem Rückspülfilter.

Figur 5 zeigt eine beispielhafte Anzeige.

Figur 6 zeigt eine weitere beispielhafte Anzeige.

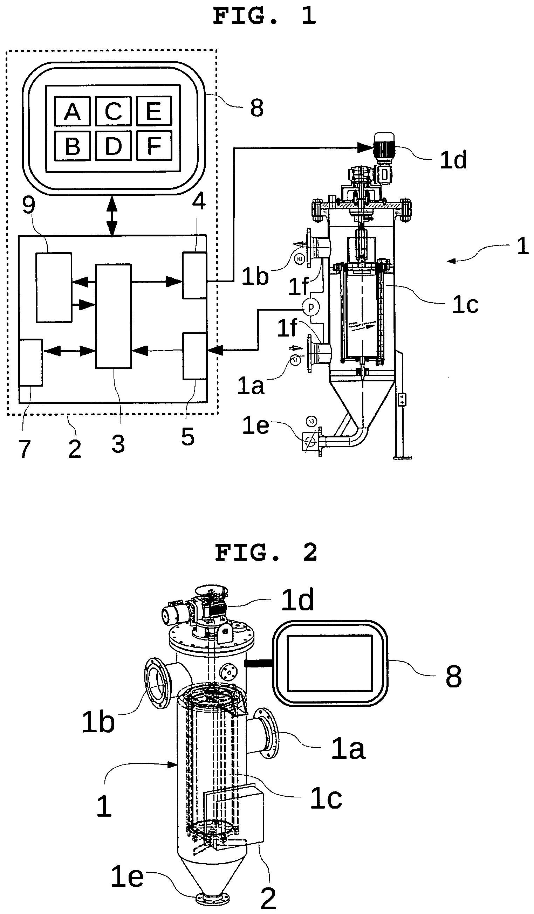

Figur 1 zeigt eine bevorzugte Ausführungsform der Steuervorrichtung 2, die einen Automatikfilter 1 steuert.

Der gesamte Aufbau kann auch als ein bevorzugtes Filtersystem angesehen werden. Der Automatikfilter 1 ist als Kantenspaltfilter mit beweglichem Filterelement 1c ausgeführt. Verschmutztes Fluid fließt durch einen Fluideinlass 1a in den Automatikfilter 1 hinein, tritt durch das Filterelement 1c hindurch, wodurch Verunreinigungen herausgefiltert werden, und tritt aus dem Fluidauslass 1b gefiltert wieder aus. Mittels eines Filtermotors 1d kann das Filterelement 1c gedreht und dadurch (gegebenenfalls mittels Schaberblechen) auch gereinigt werden. Über eine Absperrarmatur 1e kann das Filtrat aus dem Automatikfilter 1 abgeführt werden. Am Fluideinlass 1a und Fluidauslass 1b sind Drucksensoren 1f angebracht, die zusammen einen Differenzdruck zwischen Fluideinlass 1a und Fluidauslass 1b messen.

Die Steuervorrichtung 2 steht mit dem Automatikfilter 1 über eine Filter-Datenschnittstelle 4 und eine Sensor-Datenschnittstelle 5 in Datenkontakt. Wie die Pfeile an der Filter-Datenschnittstelle 4 und eine Sensor-Datenschnittstelle 5 andeuten, werden Steuerdaten von der Filter-Datenschnittstelle 4 an den Filtermotor 1d gesendet und Daten der Drucksensoren 1f von der Sensor-Datenschnittstelle 5 empfangen. In einem weiteren Anwendungsbeispiel könnten die Drucksensoren 1f auch Teil der Steuervorrichtung 2 sein. Aus Gründen der Übersicht ist kein Pfeil von der Filter-Datenschnittstelle 4 zu der Absperrarmatur 1e eingezeichnet, die durchaus auch von der Steuervorrichtung 2 angesteuert werden sollte. Der Pfeil von der Filter-Datenschnittstelle 4 zum Automatikfilter 1 kann als Symbol dafür angesehen werden, dass beliebige steuerbare (alle steuerbaren) Komponenten des Filters von der Steuervorrichtung 2 angesteuert werden.

Die Daten der Drucksensoren werden von einer Recheneinheit 3 verarbeitet, welche auch die Steuerdaten erstellt. Über eine Netzwerkschnittstelle 7 kann die Steuervorrichtung mit einem System im Rahmen des Konzepts "Industrie 4.0" in Datenkontakt treten und Informationen an dieses System senden und von diesem empfangen.

Ein Benutzer kann über ein Touchpanel 8 (Eingabe/Ausgabe-Einheit) mit der Steuervorrichtung 2 in Kontakt treten und manuell Einstellungen verändern oder Informationen abrufen. In dem dargestellten Touchpanel 8 sind in Kastenform sechs Anzeigeelemente A bis F angedeutet, die von einem Benutzer angewählt werden können, wobei das Layout im Grunde frei gestaltet werden kann, jedoch generisch bzw. intuitiv aufgebaut sein sollte.

Anzeigeelement A könnte beispielsweise mit einer Programm-Schrittanzeige und/oder eine Betriebsart verknüpft sein. Die Programm-Schrittanzeige kann als reines Ausgabeelement den aktuellen Zustand (Schritt) des Steuerprogramms anzeigen. Hinsichtlich der Betriebsart kann die aktuelle Betriebsart (z.B. manuell oder Automatik) angezeigt werden, aber das Element gleichzeitig zur Auswahl einer alternativen Betriebsart verwendet werden. Anzeigeelement B könnte das aktive Rezept anzeigen und mit einer Vorwahl sowie einer speicherbaren Parametrisierung verknüpft sein. Anzeigeelement C kann mit einer Simulation verknüpft sein. Anzeigeelement D kann mit den steuerbaren Komponenten des Automatikfilters 1 verknüpft sein und Informationen über den Filtermotor 1d ausgeben (Filtermotor ein/aus, Anzeige der Geschwindigkeit, Anzahl der Motorumdrehungen, Absperrklappe, auf/zu), aber auch zur Steuerung der Komponenten verwendet werden.

Beispielsweise könnte der Benutzer nach Anwahl dieses Anzeigeelements in ein Untermenü zur Steuerung gelangen. Anzeigeelement E kann Informationen zu den Drucksensoren ausgeben, z.B. Eingangsdruck, Ausgangsdruck und Differenzdruck, insbesondere nach Anwahl des Anzeigeelements in Form von Graphen, Anzeigeelement F kann allgemeine Informationen liefern, wie z.B. Servicenummern oder Warnhinweise.

Alle Betriebsparameter können beispielsweise als "Basisrezept" eingestellt und automatisch abgearbeitet werden. Das Intervall für die Abreinigung des Filterelements 1c kann sich sowohl von der Zeit als auch vom Differenzdruck abhängig einstellen lassen. Allerdings sollten viele Vorgaben, z.B. für den Differenzdruck, die von einem Industrie 4.0 System stammen, stets Vorrang haben, auch wenn das zeitlich definierte Intervall anders festgelegt sein sollte. Die Berstsicherheit sollte jedoch dabei stets priorisiert sein.

Alle voreingestellten Parameter sollten sich unter einem individuellen oder auf eine Gruppe gerichteten Menüpunkt verändern lassen bzw. auf die jeweiligen Prozessanforderungen anpassen lassen. Spezifische Einstellungen könnten zur erneuten Verwendung als "Rezept-Datei" in einer internen Datenbank 9 abgespeichert werden. Diese interne Datenbank 9 kann einen nichtflüchtigen Speicher umfassen, in den auch Messdaten verknüpft mit Messzeitpunkten abgespeichert werden können.

Drei beispielhafte Betriebsart-Varianten sind "Manuell", "Automatik 1" und "Automatik 2":
Im Rahmen der Variante "Manuell" erfolgt eine manuelle Befehlseingabe zum Öffnen und Schließen der Absperrarmatur 1e sowie zum Ein- und Abstellen des Filtermotors 1d.

Im Rahmen der Variante "Automatik 1" wird bei Erreichen eines voreingestellten Grenzwerts für den Differenzdruck der Filtermotor 1d aktiviert. Er dreht das Filterwerk mit dem Filterelement 1c mit einer vorgegebenen Anzahl von Umdrehungen. Dazu öffnet sich nach einer vorgegebenen Zeit oder Umdrehungszahl die Absperrarmatur 1e zur Abfuhr des abgereinigten Filtrats. Danach schließt sich die Absperrarmatur 1e wieder.

Im Rahmen der Variante "Automatik 2" dreht der Filtermotor 1d das Filterelement 1c langsam aber kontinuierlich. Ist ein kritischer Differenzdruck erreicht, wird die Umdrehungszahl erhöht und bis zur voreingestellten Anzahl fortgeführt. Öffnen und Schließen der Absperrarmatur 1e erfolgt wie bei Variante "Automatik 1".

Die Filtersteuerung kann zeit- als auch differenzdruckabhängig eingestellt werden. Auch wenn die Säuberung des Filterelements über die Zeit eingestellt wurde, sollte der Berstdruck stets vorrangig behandelt werden (s.o.).

Weitere Beispiele für via Touchpanel 8 komfortabel realisierbare Funktionen sind: Wahl des Programms/Rezepts je nach Filtertyp, Änderung des Berstdrucks, der Zeiten und Differenzdrücke sowie Änderung oder Programmierung von (neu) angebauten Komponenten.

Es können auch manuelle Filter an die Steuervorrichtung angeschlossen werden. Diese können mit Überwachungssensoren (z.B. Strömungs-, Druck-, Differenz-, Temperatursensoren) zum Auswerten von verfahrenstechnischen Informationen ausgerüstet werden. Ziel bei der Überwachung von manuellen Filtern ist es, einem System Industrie 4.0 direkte Informationen zum Prozess zu übermitteln. Jedoch ist der Einsatz in Automatikfiltern bevorzugt. Im Folgenden werden drei Varianten von bevorzugten Filtersystemen dargestellt.

Figur 2 zeigt ein Ausführungsbeispiel mit einem Kantenspaltfilter als Automatikfilter 1. Dieser wurde bereits in Figur 1 schematisch gezeigt. In dieser Ausführung sind diejenigen Komponenten der Steuervorrichtung 2, die in Figur 1 in dem durchgezogenen Kasten dargestellt sind, mit dem Referenzzeichen 2 versehen, um anzudeuten, dass im Grunde alle Komponenten bis auf das Touchpad 8 (und gegebenenfalls Sensoren) in einem Gehäuse direkt an dem Automatikfilter untergebracht sind. Das Touchpanel 8 ist für eine bessere Zugänglichkeit am oberen Teil des Automatikfilters 1 angeordnet.

Ein möglicher Zyklus läuft in folgenden Schritten ab: Bei Betätigung eines Bereichs "Start/Automatik" auf dem Touchpanel 8 dreht der Filtermotor 1d eine Umdrehung, die von der Recheneinheit 3 (s. Figur 1) mittels eines Motorsensors (nicht dargestellt) über die Zeit gemessen wird. Im normalen Betrieb wird mittels der Drucksensoren 1f geprüft, ob ein vorgegebener Grenzwert für den Differenzdruck erreicht ist. Bei Erreichen des Grenzwerts wird von der Recheneinheit 3 über die Filter-Datenschnittstelle 4 (s. Figur 1) ein Steuersignal an den Filtermotor 1d geschickt, dass er eine wählbare Anzahl an Umdrehung fahren soll. Bei der letzten Umdrehung öffnet sich die Absperrarmatur 1e für eine programmierbare Zeit. Bei Beendigung der Schritte fahren alle Aktoren in Referenz und der Differenzdruck wird erneut kontrolliert. Sollte dieser immer noch zu hoch sein, wiederholt er den ganzen Prozess bis zu dreimal, danach erscheint eine Fehlermeldung im Touchpad 8.

Ein weiterer möglicher Zyklus läuft in folgenden Schritten ab: Bei Betätigung eines Bereichs "Start/Manuell" auf dem Touchpanel 8 dreht das Filterelement 1c dauerhaft. Die Drucksensoren 1f überprüfen den Differenzdruck und die Recheneinheit 3 setzt über die Filter-Datenschnittstelle 4 die Umdrehungszahl des Filtermotors 1d pro Minute bei einem erreichte Grenzwert hoch. Sobald der Differenzdruck wieder auf einen voreingestellten Wert fällt, wird die Umdrehungszahl des Filtermotors 1d wieder verringert. Die Absperrarmatur 1e öffnet und schließt nach vorgewählten Zeiten.

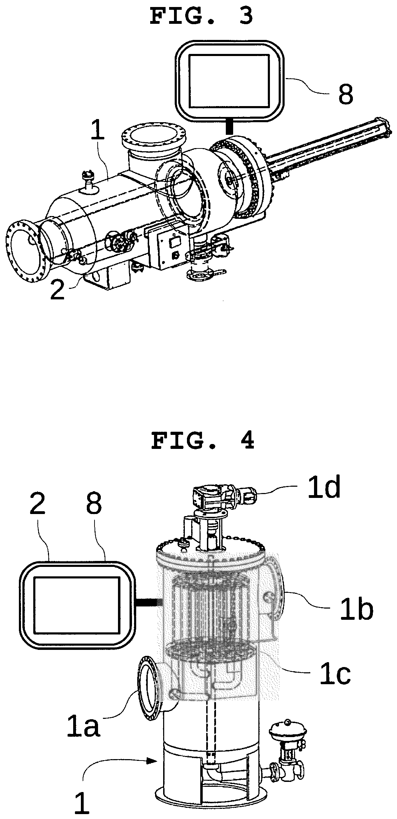

Figur 3 zeigt ein Ausführungsbeispiel mit einem Bernoullifilter. Die Steuervorrichtung 2, deren Komponenten zur Bearbeitung und Leitung von Daten wieder in einem Gehäuse am Automatikfilter 1 untergebracht sind, überwacht den Filtrationsprozess des Automatikfilters 1 kontinuierlich. Die erste Spülphase wird zeit- oder differenzdruckabhängig automatisch eingeleitet. Nach Erreichen eines voreingestellten Differenzdrucks oder nach Ablauf eines wählbaren Zeitintervalls (z.B. 6 Stunden) wird zunächst lediglich ein Spülventil geöffnet (nicht eingezeichnet) und grobe Schmutzpartikel über das Spülventil aus dem Automatikfilter 1 abgeleitet. Nach einer Verzögerungszeit (z.B. 6 Sekunden) findet eine Spülung statt bis der Selbstreinigungsprozess abgeschlossen ist und das Spülventil wieder schließt. Sollte der Differenzdruck nach Ablauf der "Selbstreinigungsprozedur" immer noch größer oder gleich einem voreingestellten Grenzwert sein, wird die Selbstreinigungsprozedur erneut gestartet. Diese "wiederholte Selbstreinigungsprozedur" läuft ab wie zuvor beschrieben.

Die vorangehend beschriebene Zeitabhängigkeit wirkt auch vorteilhaft auf die Filtereigenschaften, da durch diese zeitabhängige Steuerung keine Stoffe an dem Filterelement festbacken können.

Ist der Differenzdruck nach der wiederholten Selbstreinigungsprozedur nicht unter den eingestellten Sollwert gesunken, wird die Notreinigung eingeleitet. Auf dem Touchpanel 8 erscheint eine Meldung, z.B. "Achtung, Differenzdruck zu hoch". Bevorzugt wird auch ein Alarmsignal über die Netzwerkschnittstelle ausgegeben.

Figur 4 zeigt ein Ausführungsbeispiel mit einem Rückspülfilter als Automatikfilter 1. In diesem Beispiel umfasst das Gehäuse des Touchpanel 8 alle Komponenten der Steuervorrichtung 2 (bis auf mögliche Sensoren). Der Rückspülfilter ist in der Lage, sich bei vollem Volumenstrom durch Rückspülen der einzelnen Filterelemente 1c selbständig zu reinigen.

Durch die abgelagerten Verunreinigungen erhöht sich mit der Zeit der Differenzdruck zwischen Fluideinlass 1a und Fluidauslass 1b. Erreicht der Differenzdruck einen voreingestellten Grenzwert, wird der Rückspülvorgang eingeleitet.

Die Absperrarmatur 1e (im Gehäuse nicht sichtbar) erhält von der Steuervorrichtung 2 ein Steuersignal zum Öffnen und das Filtrat kann abgeführt werden. Der Rückspülvorgang ist normalerweise nach einer vollen Umdrehung des Filtermotors 1d bzw. des Rückspülarmes beendet, bei hoher Schmutzbelastung oder schwer ausspülbarer Verunreinigung kann dieser Vorgang wiederholt werden, z.B. bis zu dreimal. Sollte der Differenzdruck nach der letzten Umdrehung einen vorgegebenen Grenzwert nicht unterschreiten, erscheint eine Fehlermeldung im Display und wird bevorzugt auch über die Netzwerkschnittstelle ausgegeben.

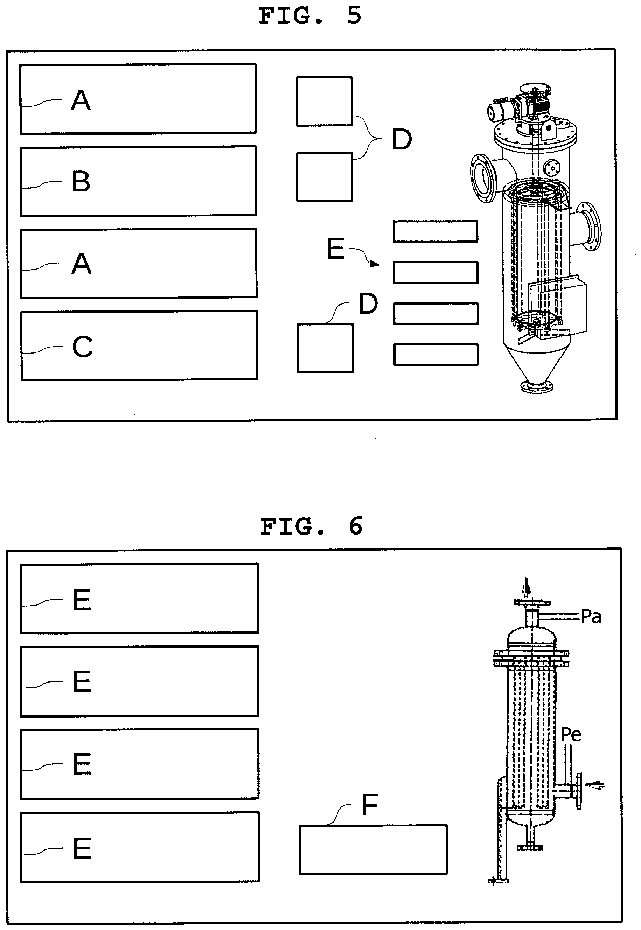

Figur 5 zeigt eine beispielhafte Anzeige, die für einen Automatikfilter vorteilhaft ist. In einer linken Spalte werden in Anzeigeelementen wichtige Angaben zum aktuellen Programm wiedergegeben. Dies sind beispielsweise von oben nach unten ein Anzeigeelement A mit einer Programm-Schrittanzeige, ein Anzeigeelement B mit dem aktuellen Rezept, ein Anzeigeelement A mit einer Betriebsart und ein Anzeigeelement C, das den Zustand einer Simulation wiedergibt.

In einer mittleren Spalte werden beispielsweise wichtige Angaben zum Filtermotor 1d und zur Absperrklappe wiedergegeben. Dies sind beispielsweise von oben nach unten ein Anzeigeelement D mit der Angabe der Umdrehungsgeschwindigkeit, der auch zur Schaltung des Filtermotors verwendet werden kann, ein Anzeigeelement D mit der Anzahl der Motorumdrehungen und ein Anzeigeelement D, dessen Anwahl ein Öffnen oder Schließen der Absperrklappe bewirkt.

Bevorzugt können einige oder alle der vorgenannten Kästen auf der Eingabe/Ausgabe-Einheit angewählt und Parameter geändert werden.

In einer rechten Spalte werden beispielsweise wichtige Messwerte von Sensoren 1f wiedergegeben. Dies sind beispielsweise von oben nach unten ein Anzeigeelement E mit der gemessenen Motorumdrehungsgeschwindigkeit, ein Anzeigeelement E mit dem gemessenen Ausgangsdruck, ein Anzeigeelement E mit dem ermittelten Differenzdruck und ein Anzeigeelement E mit dem gemessenen Eingangsdruck.

Ganz rechts ist eine Abbildung des aktuellen Filters zu sehen.

Figur 6 zeigt eine weitere beispielhafte Anzeige, die für einen manuellen Filter vorteilhaft ist. In einer linken Spalte werden mittels Anzeigeelementen wichtige Messwerte von Sensoren 1f wiedergegeben. Dies sind beispielsweise von oben nach unten ein Anzeigeelement E mit dem gemessenen Eingangsdruck Pe, ein Anzeigeelement E mit dem gemessenen Ausgangsdruck Pa, ein Anzeigeelement E mit dem ermittelten Differenzdruck und ein Anzeigeelement E mit der berechneten Lebensdauer des manuellen Filters.

Im mittleren Teil ist in einem Anzeigeelement F eine Servicenummer angegeben, unter der Hilfe für diesen Filter erhalten werden kann.

Ganz rechts ist auch hier wie in Figur 5 eine Abbildung des aktuellen Filters zu sehen.

### Bezugszeichenliste

- 1: Automatikfilter
- 1a: Fluideinlass
- 1b: Fluidauslass
- 1c: Filterelement
- 1d: Filtermotor
- 1e: Absperrarmatur
- 1f: Drucksensor /Sensor
- 2: Steuervorrichtung
- 3: Recheneinheit
- 4: Filter-Datenschnittstelle
- 5: Sensor-Datenschnittstelle
- 7: Netzwerkschnittstelle
- 8: Touchpanel
- A, B, C, D, E, F: Anzeigeelement

## Patentansprüche

1. Steuervorrichtung für einen Automatikfilter für Fluide, umfassend:
- eine Filter-Datenschnittstelle zur Übermittlung von Steuerdaten an den Automatikfilter,
- ein Sensorsystem und/oder eine Sensor-Datenschnittstelle zum Empfang von Zustandsdaten des Automatikfilters,
- eine Eingabe/Ausgabe-Einheit, ausgelegt zur Eingabe von manuellen Befehlen und zur Ausgabe von Daten,
- eine Netzwerkschnittstelle zum Datenaustausch mit einem Datennetzwerk,
- eine Recheneinheit ausgelegt zur Verarbeitung der Zustandsdaten des Automatikfilters, zur Steuerung der Eingabe/Ausgabe-Einheit und Verarbeitung von eingegebenen Daten, zur Erstellung von Steuerdaten zur Steuerung des Automatikfilters, und zur Bedienung der Netzwerkschnittstelle,
**dadurch gekennzeichnet, dass** sie dazu ausgestaltet ist, die über das Sensorsystem oder die Sensor-Datenschnittstelle erhaltenen Zustandsdaten und/oder die von ihr an den Automatikfilter übermittelten Steuerdaten,
- an ein Gerät ("Vorläufer-Gerät"), welches im Betriebsablauf vor dem Automatikfilter angeordnet ist und von dessen Funktion das in einen Fluideinlass des Filters einströmende Fluid beeinflusst wird, und/oder
- an ein Gerät ("Nachfolge-Gerät"), welches im Betriebsablauf nach dem Automatikfilter angeordnet ist und dessen Funktion von dem aus einem Fluidauslass des Filters ausströmenden Fluid beeinflusst wird,
zu senden.

2. Steuervorrichtung nach Anspruch 1, **dadurch gekennzeichnet, dass** sie Daten, die sie von dem "Vorläufer-Gerät" erhält, analysiert, daraus eine Flussgeschwindigkeit, einen Verschmutzungsgrad, eine Verschmutzungsart oder eine Fluidmenge eines zu erwartenden Fluidflusses ableitet, und die Funktionsweise des Filters oder Säuberungs- und Wartungsintervalle des Filters entsprechend anpasst.

3. Steuervorrichtung nach Anspruch 1 oder 2, **dadurch gekennzeichnet, dass** sie Daten über Parameterwerte eines aktuellen Fluidflusses oder Daten zu einem zu erwartenden Fluidfluss an das "Nachfolge-Gerät" sendet.

4. Steuervorrichtung nach einem der vorangehenden Ansprüche, **dadurch gekennzeichnet, dass** sie als Eingabe/Ausgabe-Einheit ein Touchpanel umfasst und so ausgestaltet ist, dass über das Touchpanel Befehle eingegeben und visuelle Informationen ausgegeben werden können.

5. Steuervorrichtung nach einem der vorangehenden Ansprüche, **dadurch gekennzeichnet, dass** sie dazu ausgestaltet ist, dass mittels der Eingabe/Ausgabe-Einheit Änderungen der Recheneinheit, insbesondere Programmänderungen oder Parameter-änderungen, vorgenommen werden können, wobei bevorzugte Änderungen eine Wahl eines voreingestellten Programms und/oder Filtertyps, eine Änderung der Zeiten und Differenzdrücke oder eine Änderung oder Programmierung der angebauten Komponenten, oder eine Änderung der Berstdrücke ist.

6. Steuervorrichtung nach einem der vorangehenden Ansprüche, **dadurch gekennzeichnet, dass** das Datennetzwerk ein aus der Intranet, Internet, LAN, WLAN und Mobilfunknetz umfassenden Gruppe ausgewähltes Netzwerk ist, wobei die Netzwerkschnittstelle insbesondere dazu ausgelegt ist, über eine Funkverbindung zu kommunizieren.

7. Steuervorrichtung nach einem der vorangehenden Ansprüche, **dadurch gekennzeichnet, dass** sie einen Datenspeicher aufweist, in dem Steuerprogramme, Parameterwerte, Grenzwerte, Messwerte, Zeitpunkte, Standardausgaben oder Benutzerinformationen abgespeichert werden können, wobei der Datenspeicher bevorzugt einen nichtflüchtigen Speicher umfasst.

8. Steuervorrichtung nach einem der vorangehenden Ansprüche, **dadurch gekennzeichnet, dass** die Recheneinheit dazu ausgelegt ist, aus Messwerten, die zu mehreren Zeitpunkten den jeweiligen Zustand des Automatikfilters darstellen, eine Wahrscheinlichkeit für einen Fehlzustand des Automatikfilters in einem zukünftigen Zeitintervall zu ermitteln.

9. Steuervorrichtung nach Anspruch 8, **dadurch gekennzeichnet, dass** sie dazu ausgestaltet ist, eine Modellfunktion, insbesondere eine Modellfunktion für die Lebensdauer des Automatikfilters oder von Filterkomponenten, an die in einem Zeitintervall gemessenen Zustandsdaten anzupassen und diese Modellfunktion insbesondere mit einer Anzahl von Grenzwerten zu vergleichen, und bevorzugt zusätzlich basierend auf dem Verlauf der Modellfunktion eine Bestellung von Verbrauchs- und Ersatzteilen zu veranlassen.

10. Steuervorrichtung nach einem der vorangehenden Ansprüche, **dadurch gekennzeichnet, dass** das Sensorsystem oder/und der Automatikfilter Sensoren zur Erfassung eines Differenzdrucks zwischen einem Druck vor einem Filtermedium und einem Druck nach dem Filtermedium aufweist, und dass die Steuervorrichtung so ausgelegt ist, dass bei Erreichen eines voreingestellten Grenzwertes für den Differenzdruck ein Rückspülvorgang eingeleitet wird.

11. Steuervorrichtung nach einem der vorangehenden Ansprüche, **dadurch gekennzeichnet, dass** die Recheneinheit dazu ausgestaltet ist, eine Menge eines bei einem Rückspülvorgang ausgeschleusten Abfallmediums aus einem gemessenen Druck, aus einer bekannten Durchlassfläche einer Rückspülklappe und einer gemessenen Öffnungszeit der Rückspülklappe zu ermitteln.

12. Filtersystem, umfassend zumindest einen Automatikfilter und eine Steuervorrichtung nach einem der vorangehenden Ansprüche.

## Claims

1. A control device for an automatic filter for fluids, comprising:
- a filter data interface for transmitting control data to the automatic filter,
- a sensor system and/or a sensor data interface for receiving status data of the automatic filter,
- an input/output unit designed for inputting manual commands and for outputting data,
- a network interface for data exchange with a data network,
- a computing unit adapted to process the status data of the automatic filter, to control the input/output unit and process input data, to generate control data for controlling the automatic filter, and to operate the network interface,
**characterized in that** it is designed to transmit the status data received via the sensor system or the sensor data interface, and/or the control data transmitted by it to the automatic filter,
- to a device ("upstream device"), which is arranged upstream of the automatic filter in the operating sequence and by whose function the fluid flowing into a fluid inlet of the filter is influenced, and/or
- to a device ("downstream device") which is arranged downstream of the automatic filter in the operating sequence and whose function is influenced by the fluid flowing out of a fluid outlet of the filter.

2. The control device according to claim 1, **characterized in that** it analyses data received from the "upstream device", derives therefrom a flow velocity, a degree of contamination, a type of contamination or a fluid quantity of an expected fluid flow, and adjusts the operation of the filter or cleaning and maintenance intervals of the filter accordingly.

3. The control device according to claim 1 or 2, **characterized in that** it sends data on parameter values of a current fluid flow or data on an expected fluid flow to the "downstream device".

4. The control device according to any one of the preceding claims, **characterized in that** it comprises a touch panel as input/output unit and is designed in such a way that commands can be input and visual information can be output via the touch panel.

5. The control device according to any one of the preceding claims, **characterized in that** it is designed so that by means of the input/output unit changes can be made to the computing unit, in particular program changes or parameter changes, preferred changes being a selection of a preset program and/or filter type, a change in the times and differential pressures or a change or programming of the attached components, or a change in the bursting pressures.

6. The control device according to any one of the preceding claims, **characterized in that** the data network is a network selected from the group comprising intranet, Internet, LAN, WLAN and mobile radio network, the network interface being designed in particular to communicate via a radio link.

7. The control device according to any one of the preceding claims, **characterized in that** it has a data memory in which control programs, parameter values, limiting values, measured values, times, standard outputs or user information can be stored, the data memory preferably comprising a non-volatile memory.

8. The control device according to any one of the preceding claims, **characterized in that** the computing unit is designed to determine a probability of a fault of the automatic filter in a future time interval from measured values which represent the respective state of the automatic filter at a plurality of times.

9. The control device according to claim 8, **characterized in that** it is designed to adapt a model function, in particular a model function for the service life of the automatic filter or of filter components, to the status data measured in a time interval and to compare this model function in particular with a number of limiting values, and preferably additionally to initiate an ordering of consumables and spare parts based on the course of the model function.

10. The control device according to any one of the preceding claims, **characterized in that** the sensor system and/or the automatic filter has sensors for detecting a differential pressure between a pressure upstream of a filter medium and a pressure downstream of the filter medium, and **in that** the control device is designed in such a way that a backflushing operation is initiated when a preset limiting value for the differential pressure is reached.

11. The control device according to any one of the preceding claims, **characterized in that** the computing unit is designed to determine a quantity of a waste medium discharged during a backflushing operation from a measured pressure, from a known passage area of a backflushing flap and from a measured opening time of the backflushing flap.

12. A filter system comprising at least one automatic filter and a control device according to any one of the preceding claims.

## Revendications

1. Dispositif de commande pour filtre automatique pour des fluides, comportant :
- une interface de données de filtrage pour communiquer des données de commande au filtre automatique,
- un système de capteurs et / ou une interface de données de capteurs destiné/e à recevoir des données d'état du filtre automatique,
- une unité d'entrée / de sortie destinée à l'entrée d'ordres manuels et la sortie de données,
- une interface de réseau destinée à l'échange de données avec un réseau informatique,
- une unité de calcul conçue pour traiter les données d'état du filtre automatique, pour commander l'unité d'entrée / de sortie et pour le traitement de données introduites, pour la génération de données de commande destinées à commander le filtre automatique et pour l'opération de l'interface de réseau,
**caractérisé en ce qu'**il est conçu pour émettre les données d'état reçues par le système de capteurs ou l'interface de données de capteurs et / ou les données de commande transmises par celui-ci au filtre automatique,
- à un dispositif ("dispositif amont") disposé, dans l'ordre d'opération, en amont du filtre automatique et dont la fonction influe sur le fluide entrant dans une entrée de fluide du filtre, et / ou
- à un dispositif ("dispositif aval") disposé, dans l'ordre d'opération, en aval du filtre automatique et dont la fonction est influencée par le fluide sortant par une sortie de fluide du filtre.

2. Dispositif de commande selon la revendication 1, **caractérisé en ce qu'**il analyse des données qu'il reçoit du "dispositif amont", en déduit une vitesse de flux, un degré de pollution, un type de pollution ou un débit de fluide d'un flux de fluide attendu pour adapter le mode de fonctionnement du filtre ou des intervalles de purge et d'entretien du filtre.

3. Dispositif de commande selon la revendication 1 ou 2, **caractérisé en ce qu'**il transmet des données de valeurs de paramètres d'un flux de fluide actuel ou des données concernant un flux de fluide attendu au "dispositif aval".

4. Dispositif de commande selon l'une des revendications précédentes, **caractérisé en ce qu'**il comporte un écran tactile en tant qu'unité d'entrée / de sortie et est conçu de sorte que l'écran tactile permet l'entrée de commandes et la sortie d'informations visuelles.

5. Dispositif de commande selon l'une des revendications précédentes, **caractérisé en ce qu'** il est conçu pour procéder, grâce à l'unité d'entrée / de sortie, à des modifications de l'unité de calcul, notamment à des modifications de programme ou à des modifications de paramètres, les modifications préférées étant le choix d'un programme et / ou d'un type de filtre préréglé, une modification des délais et des pressions différentielles ou une modification ou une programmation des composants montés, ou une modification des pressions d'éclatement.

6. Dispositif de commande selon l'une des revendications précédentes, **caractérisé en ce que** le réseau informatique est un réseau choisi dans le groupe constitué par l'intranet, l'internet, un réseau LAN, un réseau Wi-Fi et un réseau téléphonique mobile, l'interface de réseau étant notamment conçue pour communiquer via une connexion radio.

7. Dispositif de commande selon l'une des revendications précédentes, **caractérisé en ce qu'**il comporte une mémoire de données dans laquelle des programmes de commande, des valeurs de paramètres, des valeurs limites, des valeurs de mesure, dates, des sorties standard ou des données utilisateur peuvent être stockés, la mémoire de données comportant de préférence une mémoire non volatile.

8. Dispositif de commande selon l'une des revendications précédentes, **caractérisé en ce que** l'unité de calcul est conçue pour déterminer, à partir de valeurs de mesure représentant à plusieurs moments l'état respectif du filtre automatique, une probabilité d'un état défectueux du filtre automatique dans un intervalle de temps futur.

9. Dispositif de commande selon la revendication 8, **caractérisée en ce qu'** il est conçu pour adapter une fonction de modèle, en particulier une fonction de modèle relative à la durée de vie du filtre automatique ou de composants de filtre, aux données d'état mesurées dans un intervalle de temps et pour comparer cette fonction de modèle notamment avec un certain nombre de valeurs limites, et de préférence par ailleurs pour provoquer, sur la base de l'évolution de la fonction de modèle, une commande de pièces d'usure et de rechange.

10. Dispositif de commande selon l'une des revendications précédentes, **caractérisé en ce que** le système de capteurs ou / et le filtre automatique présente des capteurs pour détecter une pression différentielle entre une pression régnant en amont d'un milieu filtrant et une pression régnant en aval du milieu filtrant, et **en ce que** le dispositif de commande est conçu pour déclencher un processus de rétrolavage lorsqu'une valeur limite pré-réglée de pression différentielle est atteinte.

11. Dispositif selon l'une des revendications précédentes, **caractérisé en ce que** l'unité de calcul est conçue pour déterminer une quantité d'un milieu de déchets évacué lors d'un processus de rétrolavage sur la base d'une pression mesurée, d'une surface de transmission connue d'un clapet de rétrolavage et d'une durée d'ouverture mesurée du clapet de rétrolavage.

12. Système de filtrage, comportant au moins un filtre automatique et un dispositif de commande selon l'une des revendications précédentes.
